# EUROPEAN PATENT APPLICATION

(11) **EP 4 027 319 A1**
(43) Date of publication of application: **13.07.2022**
(21) Application number: 21215324.1
(22) Date of filing: 16.12.2021
(51) Int. Cl.: G08G 5/00, G08G 5/04, B64C 39/02

(54) **SYSTEMS AND METHODS FOR PERFORMANCE BASED TACTICAL SEPARATION**

(30) Priority: 06.01.2021 US 202117142562
(71) Applicant: GE Aviation Systems LLC, Grand Rapids, MI 49512 (US)
(72) Inventor: BORGYOS, Szabolcs, Grand Rapids, 49512 (US)
(74) Representative: Openshaw & Co.

(57) **Abstract**

A method of performing conflict avoidance may comprise receiving a request to authorize a first flight plan for an unmanned aircraft system, determining whether any scheduled flight plans overlap with the first flight plan, in response to determination that no scheduled flight plans overlap with the first flight plan, authorizing the first flight plan, determining one or more contingency routes associated with the first flight plan, and determining an airspace volume associated with the first flight plan for the unmanned aircraft system.

## Description

### FIELD

The present disclosure relates to monitoring of aerial vehicles, and more specifically, to systems and methods for performance based tactical separation.

### BACKGROUND

Manned aircraft systems are implemented by a multilayer model for conflict avoidance developed by the International Civil Aviation Organization (ICAO). This model is designed to ensure the safety of aircraft and avoid collisions at three different layers. A first layer is strategic separation. This layer involves ensuring that no two aircraft have flight plans that overlap or use the same airspace. If the strategic separation layer fails, a second layer is tactical separation. This layer involves monitoring aircraft flights and ensuring that aircraft remain sufficiently far apart from each other to avoid collisions. This is typically done by an air traffic control system and air traffic controllers. If an air traffic controller observes two aircraft approaching each other at too close of a distance, the air traffic controller may instruct one or both of the aircrafts to modify their trajectory. Lastly, if strategic separation and tactical separation both fail, a third layer is collision avoidance. This layer involves pilots engaging in maneuvers to avoid collisions with other aircraft. An aircraft may have specialized equipment onboard to assist in collision avoidance.

Unmanned aerial vehicles, or drones, are increasingly being flown either for commercial or other purposes. As such, as more and more drones are operated, the potential for collisions between drones and manned aircraft is increasing. Thus, a conflict avoidance system for drones may be desirable. Unmanned traffic management systems have been developed to manage unmanned aerial vehicle traffic. Some of these systems monitor flight plans of drones to provide strategic separation in a similar manner as is provided for manned aircraft. However, these systems typically do not include the other layers of conflict avoidance provided for manned aircraft; namely tactical separation and collision avoidance. Therefore, there is a need for an improved conflict avoidance system for unmanned aerial vehicles that can be harmonized with the concepts implemented within manned aviation so that manned-unmanned integration may be achieved.

### SUMMARY

In an embodiment, a method of performing conflict avoidance includes receiving a request to authorize a first flight plan for an unmanned aircraft system, determining whether any scheduled flight plans overlap with the first flight plan, in response to determination that no scheduled flight plans overlap with the first flight plan, authorizing the first flight plan, determining one or more contingency routes associated with the first flight plan, and determining an airspace volume associated with the first flight plan for the unmanned aircraft system.

In an embodiment, a conflict avoidance unit includes one or more processors, one or more memory modules, and machine readable instructions stored in the one or more memory modules. When executed by the one or more processors, the instructions cause the conflict avoidance unit to receive a request to authorize a first flight plan for an unmanned aircraft system, determine whether any scheduled flight plans overlap with the first flight plan, in response to determination that no scheduled flight plans overlap with the first flight plan, authorize the first flight plan, determine one or more contingency routes associated with the first flight plan, and determine an airspace volume associated with the first flight plan or the one or more contingency routes for the unmanned aircraft system.

In an embodiment, a system includes an unmanned traffic management network and a conflict avoidance unit. The unmanned traffic management network includes one or more unmanned aircraft system service suppliers and is configured to monitor one or more unmanned aircraft systems and stored scheduled flight plans for the one or more unmanned aircraft systems. The conflict avoidance unit is configured to receive a request to authorize a first flight plan for a first unmanned aircraft system, determine whether any flight plans scheduled with the unmanned traffic management network overlap with the first flight plan, authorize the first flight plan in response to determination that no flight plans scheduled with the unmanned traffic management network overlap with the first flight plan, determine one or more contingency routes associated with the first flight plan, and determine an airspace volume associated with the first flight plan for the first unmanned aircraft system.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 schematically depicts an exemplary system for performing conflict avoidance, according to one or more embodiments shown and described herein;
FIG. 2 schematically depicts an example conflict avoidance unit, according to one or more embodiments shown and described herein;
FIG. 3 schematically depicts the another view of the exemplary system for performing conflict avoidance, according to one or more embodiments shown and described herein;
FIG. 4 depicts a flow chart of an illustrative method of performing conflict avoidance, according to one or more embodiments shown and described herein;
FIG. 5 depicts a flow chart of another illustrative method of performing conflict avoidance, according to one or more embodiments shown and described herein; and
FIG. 6 depicts a flow chart of another illustrative method of performing conflict avoidance, according to one or more embodiments shown and described herein.

### DETAILED DESCRIPTION

The present disclosure generally relates to a conflict avoidance system for unmanned aircraft systems (UAS). UAS may also be referred to as unmanned aerial vehicles (UAV) or drones. The conflict avoidance system of the present disclosure comprises a layered conflict avoidance system comprising three layers. The conflict avoidance system typically used for manned aircraft comprises a strategic separation layer, a tactical separation layer, and a collision avoidance layer. The strategic separation layer assures that aircraft flight plans do not overlap or utilize the same airspace. The tactical separation layer allows air traffic controllers to monitor and redirect aircraft. The collision avoidance layer allows a pilot to perform aerial maneuvers to avoid other aircraft. These three layers work together to ensure the safety of manned aircraft and prevent aerial collisions.

A similarly layered conflict avoidance system may be desired for UAS. However, there are several distinctions between UAS and manned aircraft that make such a system for UAS difficult to implement. UAS do not have a human pilot on board but instead are operated by a remote pilot, self-flying program, or autonomous operating system. In addition, there are no air traffic controllers monitoring UAS in the same way that air traffic controllers monitored manned aircraft. Accordingly, a different approach must be utilized to implement a layered conflict avoidance system for UAS.

Disclosed herein is a conflict avoidance system for UAS. The conflict avoidance system has a strategic separation layer, a tactical separation layer, and a collision avoidance layer. The strategic separation layer is implemented by managing flight plans for UAS to ensure that they do not overlap. The tactical separation layer is implemented by determining contingency procedures for a UAS flight plan for enabling tactical maneuvers. The collision avoidance layer is implemented by allowing a UAS pilot to maneuver a UAS to avoid a collision. As disclosed herein, these three layers act in harmony with each other in a layered model that is valid during flight operations.

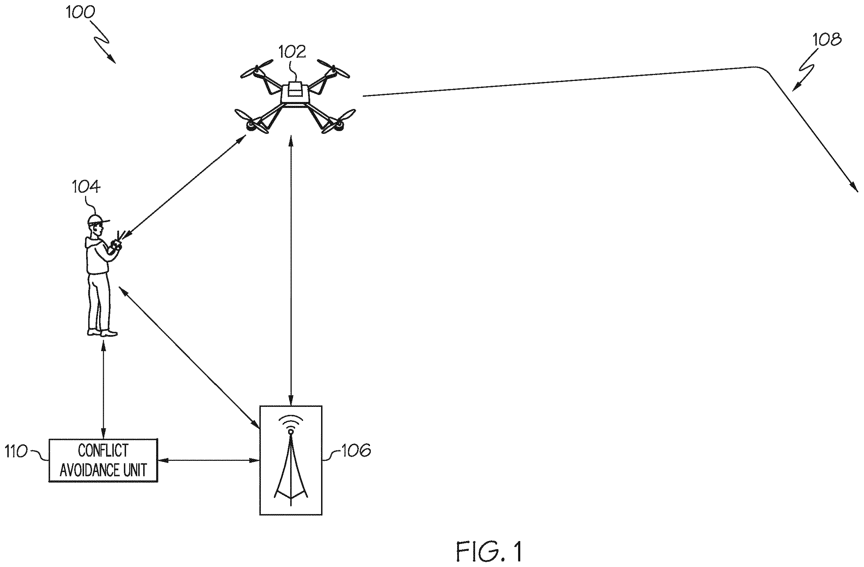

FIG. 1 depicts an example system 100 for providing conflict avoidance for UAS. In the example of FIG. 1, a UAS 102 is flown in a certain airspace along a flight plan or flight path 108. The UAS 102 may be controlled remotely by a UAS operator 104. The UAS operator 104 may communicate with the UAS 102 via a command and control link (e.g., satellite, radio, cell phone). The UAS operator 104 may transmit commands to control the movement and operation of the UAS 102 and the UAS 102 may transmit commands back to the UAS operator 104 (e.g., telemetry data or other types of data). In some examples, the UAS 102 may operate partially or completely autonomously.

A UTM network 106 may manage air traffic involving the UAS 102 and other UAS. The UTM network 106 may comprise one or more UAS service suppliers (USS). A USS may manage UAS traffic within a certain geographic area and/or for a certain set of clients. A USS may monitor UAS with either ground based radar tracking and/or by receiving telemetry directly from UAS that identifies their position. In addition to tracking the position of UAS, a USS may communicate with UAS operators to provide instructions to guide UAS along certain routes to avoid collision with other UAS and to otherwise manage airspace, as disclosed herein.

While a single USS may cover a certain geographic area, a plurality of USS may be part of the UTM network 106 to manage air traffic over a larger geographic area. Different USS that are part of the UTM network 106 may communicate with each other to jointly manage UAS air traffic (e.g., one USS may monitor a particular UAS and hand off control to another USS as the USS is leaving its airspace). UAS operators typically sign up for service with the USS of their choice. As such, multiple USS may provide service to clients in overlapping geographic areas, in which case they may communicate with each other to jointly ensure aircraft separation.

Each USS of the UTM network 106 may monitor one or more UAS operated by one of the clients of the USS using ground-based tracking (e.g., radar) and/or by receiving telemetry information from the UAS themselves. A USS may send commands to the operators of the UAS being monitored to ensure that UAS do not collide with each other and to provide other air traffic control features. In some examples, a USS may send commands directly to UAS to modify their operation (e.g., changing their flight path). In addition, multiple USS in the UTM network 106 may communicate with each other to ensure that UAS being monitored by different USS do not collide with each other. USS may also receive supplemental data from other service providers (e.g., information regarding weather, terrain, and the like) and may provide this information to the USS clients.

A conflict avoidance unit 110 may provide conflict avoidance as described herein. In the illustrated example, the conflict avoidance unit 110 is a cloud-based server computing device. However, in other examples, the conflict avoidance unit 110 may be any type of computing device (e.g., mobile computing device, personal computer, etc.). Additionally, while the conflict avoidance unit 110 is depicted in FIGS. 1-2 as a single piece of hardware, this is merely an example. In some examples, the conflict avoidance unit 110 may represent a plurality of computers, servers, databases, etc. In some examples, the conflict avoidance unit 110 may be configured as a collection of cooperating computing devices or even as a special purpose computer designed specifically for performing the functionality described herein.

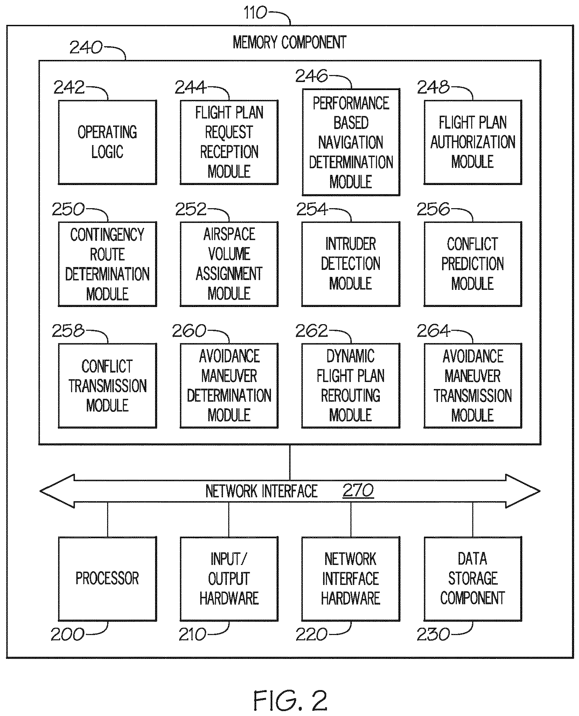

Now referring to FIG. 2, the components of the conflict avoidance unit 110 are schematically depicted. As illustrated in FIG. 2, the conflict avoidance unit 110 may include a processor 200, input/output hardware 210, network interface hardware 220, a data storage component 230, and a non-transitory memory component 240. The memory component 240 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 240 may be configured to store operating logic 242, a flight plan request reception module 244, a performance based navigation determination module 246, a flight plan authorization module 248, a contingency route determination module 250, an airspace volume assignment module 252, an intruder detection module 254, a conflict prediction module 256, a conflict transmission module 258, an avoidance maneuver determination module 260, a dynamic flight plan rerouting module 262, and an avoidance maneuver transmission module 264 (each of which may be embodied as a computer program, firmware, or hardware, as an example). A network interface 270 is also included in FIG. 2 and may be implemented as a bus or other interface to facilitate communication among the components of the conflict avoidance unit 110.

The processor 200 may include any processing component configured to receive and execute instructions (such as from the data storage component 230 and/or the memory component 240). The input/output hardware 210 may include a monitor, keyboard, mouse, printer, camera, microphone, speaker, touchscreen, and/or other device for receiving from, and sending data to the conflict avoidance unit 110. The network interface hardware 220 may include any wired or wireless networking hardware, such as a modem, LAN port, wireless fidelity (Wi-Fi) card, WiMax card, mobile communications hardware, and/or other hardware for communicating with the UTM network 106, and other networks and/or devices.

The data storage component 230 may store information received from the UAS operator 104 and/or the UTM network 106. The data received from these devices or systems is discussed in further detail below.

Included in the memory component 240 are operating logic 242, the flight plan request reception module 244, the performance based navigation determination module 246, the flight plan authorization module 248, the contingency route determination module 250, the airspace volume assignment module 252, the intruder detection module 254, the conflict prediction module 256, the conflict transmission module 258, the avoidance maneuver determination module 260, the dynamic flight plan rerouting module 262, and the avoidance maneuver transmission module 264. The operating logic 242 may include an operating system and/or other software for managing components of the conflict avoidance unit 110.

The flight plan request reception module 244 may receive a request from the UAS operator 104 to authorize a flight plan for the UAS 102. In one example, a flight plan request may include a desired starting and ending location for the UAS 102 flight. In other examples, a flight plan request may include one or many waypoints to be visited by the UAS 102 during the flight. In other examples, a flight plan request may include additional information about a desired flight plan such as a desired altitude of the flight, a desired geographical area to fly over, and the like. The flight plan request reception module 244 may also receive a model of the UAS 102 to be used during the flight. The received UAS model may be used by the performance based navigation determination module 246 to determine performance based navigation capabilities of the UAS 102, as described in further detail below.

The performance based navigation determination module 246 may determine performance based navigation capabilities of the UAS 102. As explained above, the flight plan request reception module 244 may receive a model of the UAS 102. Thus, the performance based navigation determination module 246 may look up the performance based navigation capabilities of the model of the UAS 102. In some examples, the data storage component 230 may store performance based navigation capabilities of various models of UAS and the performance based navigation determination module 246 may look up the performance based navigation capabilities of the model of the UAS 102 in the data storage component 230. In other examples, the performance based navigation determination module 246 may look up the performance based navigation capabilities of the model of the UAS 102 in an external computing device. In some examples, the flight plan request reception module 244 may receive the performance based navigation capabilities of the UAS 102 directly from the UAS operator 104.

The performance based navigation capabilities of the UAS 102 may include flight capabilities of the UAS 102 based on the sensors and flight dynamics of the UAS 102. The performance based navigation capabilities of the UAS 102 may determine the ability of the UAS 102 to maneuver to avoid conflict situations. As such, the performance based navigation capabilities of the UAS 102, as determined by the performance based navigation determination module 246, may be used in conflict avoidance, as discussed in further detail below.

The flight plan authorization module 248 may authorize a flight plan request received by the flight plan request reception module 244. An exemplary flight plan 108 is shown in FIG. 1. When the flight plan request reception module 244 receives a request to authorize a flight plan, the flight plan authorization module 248 may communicate with the UTM network 106 to determine whether any other scheduled flight plans for other UAS conflict with the requested flight plan. As disclosed herein, a first flight plan conflicts with a second flight plan if the path of the first flight plan overlaps the path of the second flight plan such that the UAS associated with the first flight plan will be within a threshold distance of the UAS associated with the second flight plan at one or more times. If no other scheduled flight plans conflict with the requested flight plan, the flight plan authorization module 248 may authorize the requested flight plan. By ensuring that flight plans for various UAS do not overlap, the flight plan authorization module 248 is able to implement the strategic separation layer or strategic de-confliction layer of the conflict avoidance system 100.

If a conflict exists between the requested flight plan and one or more currently scheduled flight plans, the flight plan authorization module 248 may determine an alternate flight plan that meets the parameters of the requested flight plan (e.g., a flight plan that utilizes a different altitude or a different route between points). If such an alternate flight plan can be determined, the flight plan authorization module 248 may authorize an alternate flight plan. If no alternate flight plan can be determined, the flight plan authorization module 248 may deny the requested flight plan. After the flight plan authorization module 248 authorizes the requested flight plan, the flight plan authorization module 248 may transmit the authorized flight plan to the UTM network 106 such that the UTM network 106 may store the details of the authorized flight plan. In some examples, the flight plan authorization module 248 may authorize a requested flight after plan using the ASTM F38 strategic de-confliction standard.

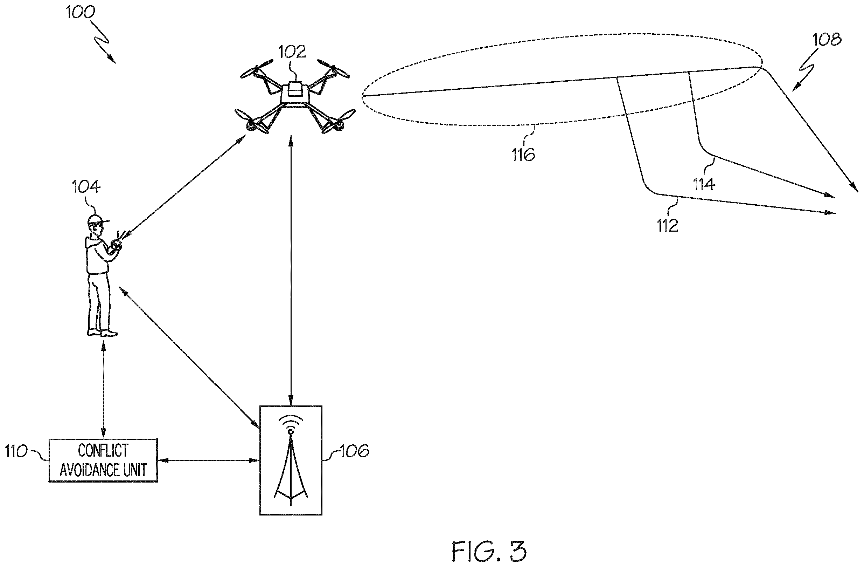

The contingency route determination module 250 may determine one or more contingency routes associated with the flight plan authorized by the flight plan authorization module 248. The contingency routes may comprise one or more alternate routes between a desired starting location and a desired ending location (e.g., contingency routes 112 and 114 as shown in FIG. 3). The contingency route determination module 250 may communicate with the UTM network 106 and determine one or more contingency routes that do not conflict with any currently scheduled flight plans. Thus, the contingency routes are expected to be free from conflict.

By determining one or more contingency routes, if a conflict arises with another aircraft during a flight along the originally authorized flight plan, the UAS 102 may modify its flight plan to follow one of the contingency routes determined by the contingency route determination module 250. Thus, this allows for the tactical separation layer of the conflict avoidance unit 110. By determining the contingency routes ahead of time, the contingency routes may be quickly accessed during a flight as needed. As such, time and computing resources need not be utilized to determine contingency routes during a flight. This may be advantageous if there is insufficient time to dynamically determine an alternate flight plan during a flight to avoid a collision.

Referring still to FIG. 2, the contingency route determination module 250 may determine the contingency routes based on the performance based navigation capabilities of the UAS 102 determined by the performance based navigation determination module 246. That is, the contingency routes may be determined such that they can be followed by the UAS 102 during a flight based on the performance based navigation capabilities of the UAS 102. After the contingency route determination module 250 determines the contingency routes, the contingency routes may be stored in the data storage component 230.

The airspace volume assignment module 252 may assign a volume of airspace around an authorized flight plan that may be utilized by the UAS 102 during a flight. For example, FIG. 3 shows an airspace volume 116 around a portion of the flight plan 108. If a conflict with another aircraft occurs during a flight, the assigned airspace volume may be utilized by the UAS 102 to avoid the conflict. For example, the UAS 102 may utilize the assigned airspace volume to veer to the side of the originally authorized flight plan during a flight to avoid a conflict with another aircraft by flying around the other aircraft. Thus, the assigned airspace volume may provide an additional feature of the tactical separation layer of the conflict avoidance unit 110. The assigned airspace volume may comprise additional secondary flight plans that may be pre-planned or planned in real-time when a conflict is detected and may be executed to mitigate the conflict, as described herein.

The airspace volume assignment module 252 may assign the volume of airspace based on the performance based navigation capabilities of the UAS 102 determined by the performance based navigation determination module 246. That is, the airspace volume may be assigned such that they can be utilized by the UAS 102 during a flight based on the performance based navigation capabilities of the UAS 102. After the airspace volume assignment module 252 assigns the volume of airspace, the assigned airspace volume may be stored in the data storage component 230.

In some examples, the airspace volume assignment module 252 may minimize the volume of airspace assigned based on the performance based navigation capabilities of the UAS 102. That is, the airspace volume assignment module 252 may assign a minimum volume of airspace around an authorized flight plan such that the UAS 102 may utilize the assigned airspace volume to avoid a conflict with another aircraft given the performance based navigation capabilities of the UAS 102.

In some examples, the airspace volume assignment module 252 may assign additional volume of airspace around a current leg of a flight of the UAS 102 during the flight. That is, during a flight of the UAS 102, for each leg of the flight, the airspace volume assignment module 252 may assign a volume of airspace around the current leg of the flight that may be larger than the original volume of airspace assigned based on performance based navigation capabilities of the UAS 102. As such, the airspace volume assignment module 252 may provide additional volume of airspace that the UAS 102 may use in the event of an intruder while minimize the overall volume of airspace reserved for the entire flight plan.

Referring still to FIG. 2, the intruder detection module 254 detects the presence of a potential intruder aircraft. A potential intruder is an aircraft that is flying within a threshold distance of the UAS 102 during a flight along the flight plan 108. The threshold distance may be set as a distance within which there is a potential conflict with the UAS 102. Thus, when another aircraft is detected within the threshold distance from the UAS 102, there may be a conflict between the detected aircraft and the flight path 108 of the UAS 102.

As explained above, the flight plan authorization module 248 implements the strategic separation layer of the conflict avoidance unit 110 by assigning flight plans to UAS such that they do not overlap each other. However, this layer may not be sufficient to prevent collisions of UAS. For example, a UAS may veer away from an assigned flight plan due to mechanical failures or operator error. Alternatively, an aircraft not monitored by the UTM network 106, and thus not assigned a non-conflicting flight plan, may have a conflicting flight path. These are examples of potential intruders that may be detected by the intruder detection module 254. Such potential intruders may indicate a failure of the strategic separation layer and the necessity to utilize the tactical separation layer as described herein.

In some examples, the flight plan authorization module 248 may assign flight plans based on predictions of traffic incursions based on historical traffic data. That is, the flight plan authorization module 248 may predict areas of airspace where traffic incursions are likely and may assign flight plans that avoid these areas of airspace.

The airspace around the UAS 102 may be monitored by the UTM network 106. The UTM network 106 may detect other aircraft in the airspace. Information about detected aircraft (e.g., its position, velocity, flight path, and the like) may be transmitted from the UTM network 106 to the conflict avoidance unit 110. The intruder detection module 254 may then determine whether any aircraft detected by the UTM network 106 are within the threshold distance of the UAS 102. Any aircraft detected within the threshold distance of the UAS 102 may be identified as a potential intruder.

After the intruder detection module 254 detects the presence of a potential intruder, the conflict prediction module 256 may predict whether a conflict will occur between the UAS 102 and the potential intruder. The conflict prediction module 256 may utilize the data received from the UTM network 106 indicating the flight path or other details associated with the intruder. The conflict prediction module 256 may also access the flight plan of the UAS 102. Thus, the conflict prediction module 256 may predict whether a conflict will occur between the UAS 102 and the potential intruder by comparing the flight plan of the UAS 102 and the detected flight path of the potential intruder. The conflict prediction module 256 may also predict a time horizon before the conflict occurs (e.g., the time before a collision is predicted). If the conflict prediction module 256 predicts that a conflict will occur between the UAS 102 and the intruder, then action may be taken by the UAS 102 to avoid the conflict, as explained in further detail below. The specific action to be taken by the UAS 102 to avoid the conflict may depend on the predicted time horizon to the conflict determined by the conflict prediction module 256.

The conflict transmission module 258 may transmit data regarding the predicted conflict to the UAS operator 104. This ensures that the UAS operator 104 is aware of the potential conflict. The conflict transmission module 258 may transmit data regarding the potential conflict including where and when the conflict is predicted to occur and the time horizon before the conflict is predicted to occur. In some examples, the conflict transmission module 258 may transmit a statistic to the UAS operator 104 regarding the potential conflict (e.g., an estimated time to collision or a visual and/or audible indication of the imminence of the potential conflict). The statistic received by the UAS operator 104 may allow the UAS operator 104 to determine how imminent the threat is from the intruder. As such, the UAS operator 104 may take appropriate evasive action such as selecting an alternate authorized flight plan, executing a contingency plan, or performing collision avoidance via human or aircraft intervention as described below.

If a collision is imminent, the UAS operator 104 may utilize collision avoidance. In this case, both the strategic separation layer and the tactical separation layer have failed, and the collision avoidance layer must be relied on to avoid the collision. In some examples, this may involve the UAS operator 104 causing the UAS 102 to perform evasive maneuvering to avoid the collision. In other examples, this may involve the UAS 102 autonomously performing evasive maneuvering to avoid the collision. However, if a collision is not imminent, the tactical separation layer may be implemented, as described in further detail below.

If the time horizon before the predicted conflict occurs is sufficiently long, the dynamic flight plan rerouting module 262 may dynamically determine a new flight plan for the UAS 102 to avoid the predicted conflict. The dynamic flight plan rerouting module 262 may determine a new flight plan for the UAS 102 in a similar manner as the flight plan authorization module 248. The dynamic flight plan rerouting module 262 may communicate with the UTM network 106 and determine a new flight plan and airspace volume associated with that flight plan that does not conflict with any currently scheduled flight plans and is free of other conflicts (e.g., aircraft traffic, terrain, obstacles, airspace restrictions, and the like). The dynamic flight plan rerouting module 262 may also determine a new flight plan that will not conflict with the detected intruder aircraft.

If the dynamic flight plan rerouting module 262 is able to determine a new flight plan for the UAS 102, the UAS 102 may follow the newly determined flight plan. However, determining and deconflicting a new flight plan may require a new airspace authorization and may take a significant amount of time. In addition, in dense traffic, there may not be sufficient excess airspace volume for a new flight plan. Accordingly, depending on the time horizon to the predicted conflict, there may not be sufficient time for the dynamic flight plan rerouting module 262 to determine a new flight plan for the UAS 102. If this is the case, other avoidance maneuvers may be implemented for the UAS 102, as explained below.

If the time horizon to the conflict predicted by the conflict prediction module 256 is insufficient for the dynamic flight plan rerouting module 262 to determine a new flight plan for the UAS 102, but not so short that the UAS 102 must perform collision avoidance, the avoidance maneuver determination module 260 may determine one or more avoidance maneuvers that may be taken by the UAS 102 to avoid a collision with an intruder aircraft. Thus, the avoidance maneuver determination module 260 may implement the tactical separation layer of the conflict avoidance unit 110. Specifically, the avoidance maneuver determination module 260 may either select a contingency route determined by the contingency route determination module 250 for the UAS 102 to follow (e.g., routes 112 or 114 in FIG. 3) or may select a portion of the airspace volume determined by the airspace volume assignment module 252 for the UAS 102 to utilize (e.g., airspace volume 116 in FIG. 3).

The avoidance maneuver determination module 260 may select one or more alternate routes for the UAS 102 to fly to avoid the collision. Because the contingency route determination module 250 and the airspace volume assignment module 252 determine possible alternate routes before the UAS 102 begins the flight along the flight plan 108, the avoidance maneuver determination module 260 may quickly select one or more alternate routes from among the predetermined alternate routes. In one example, the avoidance maneuver determination module 260 may determine an avoidance maneuver that involves the UAS 102 utilizing a contingency route determined by the contingency route determination module 250. In another example, the avoidance maneuver determination module 260 may determine an avoidance maneuver that involves the UAS 102 flying in a portion of the airspace volume determined by the airspace volume assignment module 252.

The avoidance maneuver determination module 260 may determine the avoidance maneuver that best avoids a possible collision between the UAS 102 and the intruder aircraft. In one example, the avoidance maneuver determination module 260 may determine the avoidance maneuver that creates the greatest distance between the UAS 102 and the intruder aircraft. In another example, the avoidance maneuver determination module 260 may determine the avoidance maneuver that is easiest for the UAS 102 to perform based on the performance based navigation capabilities of the UAS 102. In some examples, the avoidance maneuver determination module 260 may determine multiple avoidance maneuvers that the UAS 102 may engage in and may rank the avoidance maneuvers according to one or more criteria, such as the criteria described above.

After the avoidance maneuver determination module 260 determines one or more avoidance maneuvers, the avoidance maneuver transmission module 264 may transmit the determined avoidance maneuvers to the UAS operator 104. As such, the UAS operator 104 may cause the UAS 102 to follow the determined avoidance maneuvers to avoid a collision with the intruder aircraft. In some examples, the avoidance maneuver transmission module 264 may transmit multiple avoidance maneuvers to the UAS operator 104 in a ranked list based on which maneuvers are preferable for avoiding a collision with the intruder aircraft. The UAS operator 104 may then select an avoid maneuver to implement from the ranked list of avoidance maneuvers.

In some examples, the avoidance maneuver transmission module 264 may transmit the determined avoidance maneuvers directly to the UAS 102, which may autonomously implement the avoidance maneuvers. In examples where the dynamic flight plan rerouting module 262 determines a new flight plan for the UAS 102, the avoidance maneuver transmission module 264 may transmit the newly determined flight plan to the UAS operator 104 and/or the UAS 102 such that the UAS 102 may follow the newly determined flight plan.

It should be understood that the components illustrated in FIG. 2 are merely illustrative and are not intended to limit the scope of this disclosure. More specifically, while the components in FIG. 2 are illustrated as residing within the conflict avoidance unit 110, this is a non-limiting example. In some embodiments, one or more of the components may reside external to the conflict avoidance unit 110.

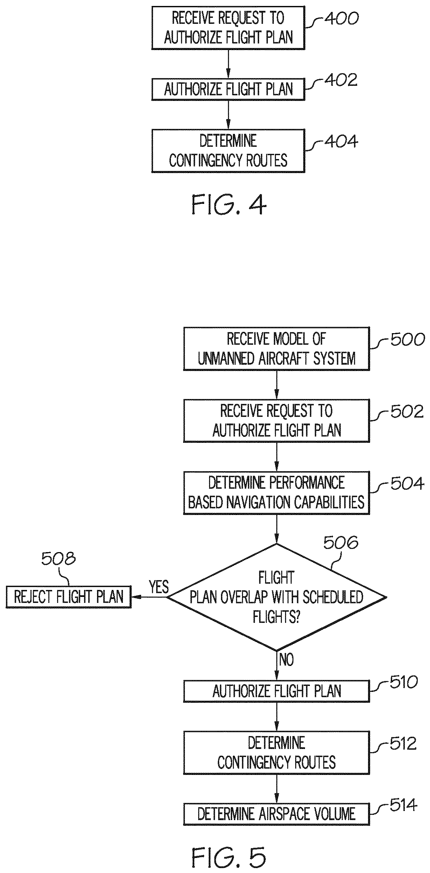

As mentioned above, the various components described with respect to FIG. 2 may be used to carry out one or more processes and/or provide functionality for conflict avoidance among unmanned aircraft. Illustrative examples of the various processes is described with respect to FIGS. 4-6. Although the steps associated with the blocks of FIGS. 4-6 will be described as being separate tasks, in other embodiments, the blocks may be combined or omitted. Further, while the steps associated with the blocks of FIGS. 4-6 will be described as being performed in a particular order, in other embodiments, the steps may be performed in a different order.

Referring now to FIG. 4, a flow chart is shown of an example method of performing conflict avoidance, according to one or more embodiments shown and described herein. More specifically, FIG. 4 shows an example method of implementing the strategic separation layer of the conflict avoidance unit 110.

At step 400, the flight plan request reception module 244 receives a request from the UAS operator 104 to authorize a first flight plan for the UAS 102. At step 402, the flight plan authorization module 248 authorizes the first flight plan. At step 404, the contingency route determination module 250 determines one or more contingency routes associated with the first flight plan.

Referring now to FIG. 5, a flow chart is shown of another example method of performing conflict avoidance, according to one or more embodiments shown and described herein. More specifically, FIG. 5 shows another example method of implementing the strategic separation layer of the conflict avoidance unit 110.

At step 500, the flight plan request reception module 244 receives a model of the UAS 102. The model of the UAS 102 may be associated with certain performance based navigation capabilities.

At step 502, the flight plan request reception module 244 receives a request from the UAS operator 104 to authorize a first flight plan for the UAS 102 system. The request to authorize the first flight plan may include a desired starting location and a desired ending location for the flight of the UAS 102.

At step 504, the performance based navigation determination module 246 determines performance based navigation capabilities of the UAS 102 based on the model of the UAS 102.

At step 506, the flight plan authorization module 248 determines whether any scheduled flight plans overlap with the first flight plan. This may comprise the flight plan authorization module 248 communicating with the UTM network 106 to determine currently scheduled flights of other UAS. If there are any scheduled flight plans that overlap with the first flight plan (yes at step 506), then, at step 508, the flight plan authorization module 248 rejects the first flight plan. If there are no scheduled flight plans that overlap with the first flight plan (no at step 506), then, at step 510, the flight plan authorization module 248 authorizes the first flight plan.

At step 512, the contingency route determination module 250 determines one or more contingency routes associated with the first flight plan.

At step 514, the airspace volume assignment module 252 determines an airspace volume associated with the first flight plan through which the UAS 102 may fly. The airspace volume may comprise a volume surrounding at least a portion of the first flight plan.

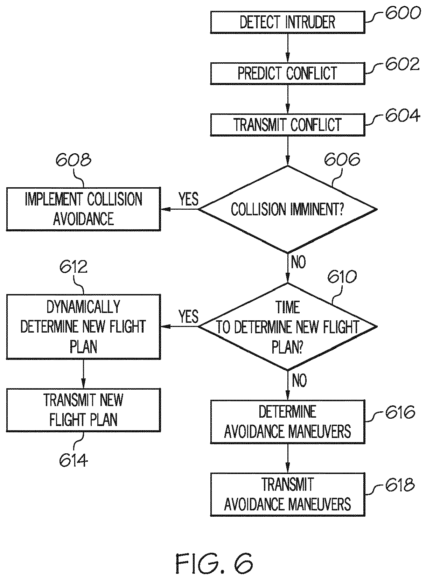

Referring now to FIG. 6, a flow chart is shown of another example method of performing conflict avoidance, according to one or more embodiments shown and described herein. More specifically, FIG. 6 shows an example method of implementing the tactical separation layer and the collision avoidance layer of the UAS 102.

At step 600, the intruder detection module 254 identifies a potential intruder aircraft that may conflict with the UAS 102. This may comprise receiving data from the UTM network 106 associated with the UAS 102 and identifying an aircraft that is within a threshold distance from the UAS 102 based on the data received from the UTM network 106.

At step 602, the conflict prediction module 256 predicts whether the potential intruder aircraft will conflict with the UAS 102. This prediction may be based on data received from the UTM network 106. If the conflict prediction module 256 predicts that the potential intruder aircraft will conflict with the UAS 102, the conflict prediction module 256 may predict a time horizon before the conflict will occur based on the data received from the UTM network 106.

At step 604, when it is predicted that the potential intruder aircraft will conflict with the UAS 102, the conflict transmission module 258 transmits data associated with the conflict to the UAS operator 104.

At step 606, the conflict prediction module 256 determines whether a collision with the intruder aircraft is imminent based on the predicted time horizon before the conflict. If the conflict prediction module 256 determines that a collision with the intruder aircraft is imminent (yes at step 606), then at step 608, the UAS operator 104 may cause the UAS 102 to engage in collision avoidance. Collision avoidance must be performed by the UAS operator 104 and/or autonomously by the UAS 102. If the conflict prediction module 256 determines that a collision with the intruder aircraft is not imminent (no at step 606), then control passes to step 610.

At step 610, the conflict prediction module 256 determines whether there is sufficient time to determine a new flight plan for the UAS 102 before the conflict occurs based on the predicted time horizon before the conflict. If the conflict prediction module 256 determines that there is sufficient time to determine a new flight plan for the UAS 102 before the conflict occurs (yes at step 610), then, at step 612, the dynamic flight plan rerouting module 262 determines a second flight plan for the UAS 102, wherein the second flight plan will cause the UAS 102 to avoid a collision with the intruder aircraft. At step 614, the avoidance maneuver transmission module 264 transmits the second flight plan to the UAS operator 104.

If the conflict prediction module 256 determines that there is not sufficient time to determine a new flight plan before the conflict occurs (no at step 610), then, at step 616, the avoidance maneuver determination module 260 determines one or more avoidance maneuvers to be implemented by the UAS 102 to avoid a collision with the intruder aircraft. The one or more avoidance maneuvers may comprise causing the UAS 102 to follow at least one of the one or more contingency routes associated with the first flight plan or causing the UAS 102 to utilize a portion of the airspace volume associated with the first flight plan.

At step 618, the avoidance maneuver transmission module 264 transmits the one or more avoidance maneuvers to the UAS operator 104. The avoidance maneuver transmission module 264 may transmit the one or more avoidance maneuvers in a ranked list.

It should now be understood that the devices, systems, and methods described herein provide conflict avoidance for unmanned aircraft systems. Conflict avoidance is provided at three layers; a strategic separation layer, a tactical separation layer, and a collision avoidance layer.

The strategic separation layer is implemented by authorizing flight plans for unmanned aircraft systems and ensuring that the flight plans for different unmanned aircraft systems do not overlap in time and space.

The tactical separation layer is implemented by determining contingency routes associated with a flight plan for an unmanned aircraft system. An unmanned traffic management network may then monitor unmanned aircraft systems during flight. If an intruder aircraft is detected that is predicted to collide with a monitored unmanned aircraft system, the unmanned traffic management network may either dynamically determine a new flight plan for the monitored unmanned aircraft system, or may instruct an operator of the monitored unmanned aircraft system to follow one of the contingency routes to avoid the collision.

The collision avoidance layer may be implemented by an operator of an unmanned aircraft system or autonomously by the unmanned aircraft system itself. If, during a flight of an unmanned aircraft system, the unmanned traffic management network detects an intruder aircraft and determines that a collision is imminent, the unmanned traffic management network may instruct the operator of the unmanned aircraft system to perform collision avoidance.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the invention are provided by the subject matter of the following clauses.

A method of performing conflict avoidance comprising receiving a request to authorize a first flight plan for an unmanned aircraft system; determining whether any scheduled flight plans overlap with the first flight plan; in response to determination that no scheduled flight plans overlap with the first flight plan, authorizing the first flight plan; determining one or more contingency routes associated with the first flight plan; and determining an airspace volume associated with the first flight plan for the unmanned aircraft system.

The method of any preceding clause, wherein the airspace volume comprises a volume surrounding at least a portion of the first flight plan.

The method of any preceding clause, further comprising receiving a model of the unmanned aircraft system; determining performance based navigation capabilities of the unmanned aircraft system based on the model; and determining the one or more contingency routes based on the performance based navigation capabilities.

The method of any preceding clause, further comprising, during a flight of the unmanned aircraft system, identifying a potential intruder aircraft; predicting whether a flight plan of the potential intruder aircraft will conflict with a flight plan of the unmanned aircraft system; and in response to prediction that the flight plan of the potential intruder aircraft will conflict with the flight plan of the unmanned aircraft system, transmitting data associated with the conflict to an operator of the unmanned aircraft system.

The method of any preceding clause, further comprising receiving data from an unmanned traffic management network associated with the unmanned aircraft system; and identifying the potential intruder aircraft based on the data received from the unmanned traffic management network.

The method of any preceding clause, further comprising, in response to prediction that the potential intruder aircraft will conflict with the unmanned aircraft system, determining an estimated time horizon before a collision will occur between the unmanned aircraft system and the potential intruder aircraft; and transmitting the estimated time horizon to the operator of the unmanned aircraft system to allow the operator of the unmanned aircraft system to take evasive action.

The method of any preceding clause, further comprising determining a second flight plan for the unmanned aircraft system, wherein the second flight plan will cause the unmanned aircraft system to avoid a collision with the potential intruder aircraft; and transmitting the second flight plan to the operator of the unmanned aircraft system.

The method of any preceding clause, further comprising determining one or more avoidance maneuvers to be implemented by the unmanned aircraft system to avoid a collision with the potential intruder aircraft; and transmitting the one or more avoidance maneuvers to the operator of the unmanned aircraft system.

The method of any preceding clause, further comprising transmitting the one or more avoidance maneuvers to the operator in a ranked list.

The method of any preceding clause, wherein the one or more avoidance maneuvers comprise causing the unmanned aircraft system to follow at least one of the one or more contingency routes associated with the first flight plan.

The method of any preceding clause, wherein the one or more avoidance maneuvers comprise causing the unmanned aircraft system to utilize a portion of the airspace volume associated with the first flight plan.

A conflict avoidance unit comprising one or more processors; one or more memory modules; and machine readable instructions stored in the one or more memory modules that, when executed by the one or more processors, cause the conflict avoidance unit to receive a request to authorize a first flight plan for an unmanned aircraft system; determine whether any scheduled flight plans overlap with the first flight plan; in response to determination that no scheduled flight plans overlap with the first flight plan, authorize the first flight plan; determine one or more contingency routes associated with the first flight plan; and determine an airspace volume associated with the first flight plan or the one or more contingency routes for the unmanned aircraft system.

The conflict avoidance unit of any preceding clause, wherein the machine readable instructions, when executed, cause the conflict avoidance unit to receive a model of the unmanned aircraft system; determine performance based navigation capabilities of the unmanned aircraft system based on the model; and determine the one or more contingency routes associated with the first flight plan and the airspace volume associated with the first flight plan based on the performance based navigation capabilities.

The conflict avoidance unit of any preceding clause, wherein the machine readable instructions, when executed, cause the conflict avoidance unit to identify a potential intruder aircraft; predict whether a flight plan of the potential intruder aircraft will conflict with a flight plan of the unmanned aircraft system; in response to prediction that the flight plan of the potential intruder aircraft will conflict with the flight plan of the unmanned aircraft system, transmit data associated with the conflict to an operator of the unmanned aircraft system; determine an estimated time horizon before a collision will occur between the unmanned aircraft system and the potential intruder aircraft ; and transmit the estimated time horizon the operator of the unmanned aircraft system to allow the operator of the unmanned aircraft system to take evasive action.

The conflict avoidance unit of any preceding clause, wherein the machine readable instructions, when executed, cause the conflict avoidance unit to determine a second flight plan for the unmanned aircraft system, wherein the second flight plan will cause the unmanned aircraft system to avoid a collision with the potential intruder aircraft; and transmit the second flight plan to the operator of the unmanned aircraft system.

The conflict avoidance unit of any preceding clause, wherein the machine readable instructions, when executed, cause the conflict avoidance unit to determine one or more avoidance maneuvers to be implemented by the unmanned aircraft system to avoid a collision with the potential intruder aircraft, wherein the one or more avoidance maneuvers comprise following at least one of the one or more contingency routes associated with the first flight plan or utilizing the airspace volume associated with the first flight plan; and transmit the one or more avoidance maneuvers to the operator of the unmanned aircraft system.

A system comprising an unmanned traffic management network comprising one or more unmanned aircraft system service suppliers and configured to monitor one or more unmanned aircraft systems and store scheduled flight plans for the one or more unmanned aircraft systems; and a conflict avoidance unit configured to receive a request to authorize a first flight plan for a first unmanned aircraft system; determine whether any flight plans scheduled with the unmanned traffic management network overlap with the first flight plan; authorize the first flight plan in response to determination that no flight plans scheduled with the unmanned traffic management network overlap with the first flight plan; determine one or more contingency routes associated with the first flight plan; and determine an airspace volume associated with the first flight plan for the first unmanned aircraft system.

The system of any preceding clause, wherein the conflict avoidance unit is further configured to receive a model of the unmanned aircraft system; determine performance based navigation capabilities of the first unmanned aircraft system based on the mode; and determine the one or more contingency routes associated with the first flight plan and the airspace volume associated with the first flight plan based on the performance based navigation capabilities.

The system of any preceding clause, wherein, during a flight of the first unmanned aircraft system, the unmanned traffic management network is configured to detect a potential intruder aircraft and transmit data associated with the potential intruder aircraft to the conflict avoidance unit; and the conflict avoidance unit is configured to predict whether the potential intruder aircraft will conflict with the first unmanned aircraft system; and in response to prediction that the potential intruder aircraft will conflict with the first unmanned aircraft system, determine one or more avoidance maneuvers to be implemented by the first unmanned aircraft system; and transmit the one or more avoidance maneuvers to an operator of the first unmanned aircraft system, wherein the one or more avoidance maneuvers are based on at least one of the one or more contingency routes associated with the first flight plan or the airspace volume associated with the first flight plan.

The system of any preceding clause, wherein, during a flight of the first unmanned aircraft system, the unmanned traffic management network is configured to detect a potential intruder aircraft and transmit data associated with the potential intruder aircraft to the conflict avoidance unit; and the conflict avoidance unit is configured to predict whether the potential intruder aircraft will conflict with the first unmanned aircraft system; and in response to prediction that the potential intruder aircraft will conflict with the first unmanned aircraft system, determine a second flight plan for the first unmanned aircraft system, wherein the second flight plan will cause the first unmanned aircraft system to avoid a collision with the potential intruder aircraft; and transmit the second flight plan to an operator of the first unmanned aircraft system.

## Claims

1. A method of performing conflict avoidance comprising:
receiving a request to authorize a first flight plan for an unmanned aircraft system;
determining whether any scheduled flight plans overlap with the first flight plan;
in response to determination that no scheduled flight plans overlap with the first flight plan, authorizing the first flight plan;
determining one or more contingency routes associated with the first flight plan; and
determining an airspace volume associated with the first flight plan for the unmanned aircraft system.

2. The method of claim 1, wherein the airspace volume comprises a volume surrounding at least a portion of the first flight plan.

3. The method of claim 1 or 2, further comprising:
receiving a model of the unmanned aircraft system;
determining performance based navigation capabilities of the unmanned aircraft system based on the model; and
determining the one or more contingency routes based on the performance based navigation capabilities.

4. The method of any of claims 1 to 3, further comprising, during a flight of the unmanned aircraft system:
identifying a potential intruder aircraft;
predicting whether a flight plan of the potential intruder aircraft will conflict with a flight plan of the unmanned aircraft system; and
in response to prediction that the flight plan of the potential intruder aircraft will conflict with the flight plan of the unmanned aircraft system, transmitting data associated with the conflict to an operator of the unmanned aircraft system.

5. The method of claim 4, further comprising:
receiving data from an unmanned traffic management network associated with the unmanned aircraft system; and
identifying the potential intruder aircraft based on the data received from the unmanned traffic management network.

6. The method of claim 4 or 5, further comprising, in response to prediction that the potential intruder aircraft will conflict with the unmanned aircraft system:
determining an estimated time horizon before a collision will occur between the unmanned aircraft system and the potential intruder aircraft; and
transmitting the estimated time horizon to the operator of the unmanned aircraft system to allow the operator of the unmanned aircraft system to take evasive action.

7. The method of claim 6, further comprising:
determining a second flight plan for the unmanned aircraft system, wherein the second flight plan will cause the unmanned aircraft system to avoid a collision with the potential intruder aircraft; and
transmitting the second flight plan to the operator of the unmanned aircraft system.

8. The method of claim 6 or 7 further comprising:
determining one or more avoidance maneuvers to be implemented by the unmanned aircraft system to avoid a collision with the potential intruder aircraft; and
transmitting the one or more avoidance maneuvers to the operator of the unmanned aircraft system.

9. The method of claim 8, wherein the one or more avoidance maneuvers comprise causing the unmanned aircraft system to follow at least one of the one or more contingency routes associated with the first flight plan.

10. The method of claim 8 or 9, wherein the one or more avoidance maneuvers comprise causing the unmanned aircraft system to utilize a portion of the airspace volume associated with the first flight plan.

11. A conflict avoidance unit, comprising:
one or more processors;
one or more memory modules; and
machine readable instructions stored in the one or more memory modules that, when executed by the one or more processors, cause the conflict avoidance unit to:
receive a request to authorize a first flight plan for an unmanned aircraft system;
determine whether any scheduled flight plans overlap with the first flight plan;
in response to determination that no scheduled flight plans overlap with the first flight plan, authorize the first flight plan;
determine one or more contingency routes associated with the first flight plan; and
determine an airspace volume associated with the first flight plan or the one or more contingency routes for the unmanned aircraft system.

12. The conflict avoidance unit of claim 11, wherein the machine readable instructions, when executed, cause the conflict avoidance unit to:
receive a model of the unmanned aircraft system;
determine performance based navigation capabilities of the unmanned aircraft system based on the model; and
determine the one or more contingency routes associated with the first flight plan and the airspace volume associated with the first flight plan based on the performance based navigation capabilities of the unmanned aircraft system.

13. The conflict avoidance unit of claim 11 or 12, wherein the machine readable instructions, when executed, cause the conflict avoidance unit to:
identify a potential intruder aircraft;
predict whether a flight plan of the potential intruder aircraft will conflict with a flight plan of the unmanned aircraft system;
in response to prediction that the flight plan of the potential intruder aircraft will conflict with the flight plan of the unmanned aircraft system,
transmit data associated with the conflict to an operator of the unmanned aircraft system;
determine an estimated time horizon before a collision will occur between the unmanned aircraft system and the potential intruder aircraft; and
transmit the estimated time horizon the operator of the unmanned aircraft system to allow the operator of the unmanned aircraft system to take evasive action.

14. The conflict avoidance unit of claim 13, wherein the machine readable instructions, when executed, cause the conflict avoidance unit to:
determine a second flight plan for the unmanned aircraft system, wherein the second flight plan will cause the unmanned aircraft system to avoid a collision with the potential intruder aircraft; and
transmit the second flight plan to the operator of the unmanned aircraft system.

15. The conflict avoidance unit of claim 13 or 14, wherein the machine readable instructions, when executed, cause the conflict avoidance unit to:
determine one or more avoidance maneuvers to be implemented by the unmanned aircraft system to avoid a collision with the potential intruder aircraft, wherein the one or more avoidance maneuvers comprise following at least one of the one or more contingency routes associated with the first flight plan or utilizing the airspace volume associated with the first flight plan; and
transmit the one or more avoidance maneuvers to the operator of the unmanned aircraft system.
